(19)

Europäisches
Patentamt
European
Patent Office
Office européen
des brevets

(11) **EP 1 739 595 A2**

(12) **EUROPEAN PATENT APPLICATION**

(43) Date of publication:
 **03.01.2007 Bulletin 2007/01**

(51) Int Cl.:
 ***G06K 15/02*** *(2006.01)*      *G03G 15/00* *(2006.01)*

(21) Application number: **06110932.8**

(22) Date of filing: **10.03.2006**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(30) Priority: **30.06.2005 JP 2005190996**

(71) Applicant: **KONICA MINOLTA BUSINESS TECHNOLOGIES, INC.**
 **Tokyo 100-0005 (JP)**

(72) Inventors:
 • **Kurohata, Takao**
  **2970 Ishikawa-machi,**
  **Tokyo 192-8505 (JP)**
 • **Yokobori, Jun**
  **2970 Ishikawa-machi,**
  **Tokyo 192-8505 (JP)**
 • **Tsukamoto, Yasumasa**
  **2970 Ishikawa-machi,**
  **Tokyo 192-8505 (JP)**

(74) Representative: **Henkel, Feiler & Hänzel**
 **Patentanwälte**
 **Maximiliansplatz 21**
 **80333 München (DE)**

(54) **IMAGE OUTPUT APPARATUS AND IMAGE OUTPUT METHOD**

(57)    An image output apparatus is provided with a memory which stores image data constituted by two or more logic pages which are associated with allotment information, a calculator which receives an input of recording medium designation information which indicates a desired recording medium out of a plurality of the re-cording media and calculates the logic page to be allotted to the recording medium indicated by the recording medium designation information, according to the allotment information, an image output device which outputs an image of the logic page which has been calculated.

EP 1 739 595 A2

**Description**

This is based on Japanese Patent Application No. 2005-190996 filed on June 30, 2005, which is incorporated hereinto by reference.

**BACKGROUND OF THE INVENTION**

The present invention relates to an image output apparatus and an image output method wherein image data made up of two or more logic pages is associated with the allotment information indicating the allotment of the logic page to a recording medium and is stored, and an image of each logic page of the image data is outputted according to the aforementioned allotment information.

A conventional image output apparatus having been commercialized includes a digital image output apparatus wherein the document is read by a reading device including an image pickup device such as a CCD (Charge Coupled Device) and is acquired as the image data, the image data being stored in the memory, and the image data being read from the memory, whereby the image is outputted to a printing sheet. Since such a digital image output apparatus allows image data to be stored in the memory, various functions based on the memory have been proposed. The aforementioned image data includes the data obtained from the reading device and the digitized version of the image data received from external equipment.

One of the functions, for example, ensures that the image data and set data including the allotment information are stored in the memory and are stored as a job. Execution of this job allows the image to be outputted according to the image data and set data stored in the memory. For example, each logic page of the image data is allotted to the printing sheet in response to the allotment information, whereby the image is outputted. The logic page refers to each page of the image data contained in the job. The order of logic pages refers to the order of the image data contained in the job. Each page of the image data subsequent to allotment of the image data to the recording medium such as a printing sheet is assumed as an allotted page. The order of allotted pages refers to the order of the pages to be outputted when the image data has been allotted.

In recent years, a function has been commercialized to modify the registered job, and is exemplified by a wait function of modifying the position of the image with respect to the printing sheet at the time of image output, for the logic page of the job with image data therein.

When the aforementioned wait function has been used for modification, the result of modification is verified in some cases. However, if an attempt is made to execute the job and to verify it, an image is outputted to the printing sheet for an unwanted logic page as well. This is not economical. To avoid this waste, a proposal has been made to designate the designated logic page of the image data to be verified, and to output the image for the designated logic page, whereby verification is performed (for example, Patent Document 1).

When a certain logic page has been modified subsequent to execution of a job, replacement of the printing sheet with the modified logic page printed thereon may be necessary. For example, in the image output apparatus described in the Patent Document 1, when such a replacement is performed, it is necessary to designate all the logic pages whose image is outputted to the printing sheet where the modified logic page is outputted, in addition to the modified logic page. Then the image is outputted.

[Patent Document 1]
Unexamined Japanese Patent Publication No. 2003-094756

However, the allotment designated by allotment information includes a great variety of forms, such as one-sided face, two-sided face, intersheet, chaptering, inserted page, overlaying, two-in-one, booklet, repeat, adhesive binding and combinations thereof. For example, in the case of a booklet, image data is allotted on the right and left of the front and rear of each printing sheet, and the images are outputted. Then the printing sheets are placed on top of one another, and are folded at the center and are bound. This will produce a booklet wherein images are arranged in the order of the logic page of image data from the left or right. To put it another way, an image is outputted on each printing sheet, the logic pages of the image data being rearranged. In case of intersheet insertion or chaptering format, blank sheets occur in the intersheet inserted portion and chaptered portion, without continuation of the images. In other words, pages without image data are inserted between the logic pages of the image data, and images are outputted in this state. Namely, image data is not outputted in the order of logic page, depending on the type of the allotment. There is disagreement between the logic page and allotted page.

Thus, depending on the allotment information of a job, it is difficult to determine the portion of the printing sheet to which image data of the job is allotted. As described above, when a certain logic page of image data has been modified, it is sometimes difficult to designate the other logic pages whose images are outputted, with respect to the printing sheet whose logic page is outputted. For example, before the image data is designated, it has been necessary to verify the rearrangement schematically on the desk or to check each image by visual observation. Namely, replacement of a printing sheet has involved complication work procedures in the conventional method.

**EP 1 739 595 A2**

**SUMMARY OF THE INVENTION**

An object of the present invention is to solve the aforementioned problems and to provide an image output apparatus and an image output method capable of extracting the logic page corresponding to a desired recording medium if each of the logic pages for the image data constituted by two or more logic pages is allotted to a plurality of pages based on the allotment information.

Another object of the present invention is to provide an image output apparatus and an image output method capable of extracting the logic page allotted to the same recording medium as the desired logic page if each of the logic pages for the image data constituted by two or more logic pages is allotted to a plurality of pages based on the allotment information.

The aforementioned objects can be achieved by the following Structures.

An image output apparatus comprising:

(a) a memory which stores image data constituted by two or more logic pages which are associated with allotment information designating allotment of each of the logic pages to a recording medium, wherein each of the logic pages of the image data is allotted to each of a plurality of recording media according to the allotment information to output an image;

(b) an input device;

(c) a calculator which receives an input of recording medium designation information which indicates a desired recording medium out of the plurality of the recording media from the input device, and calculates the logic page to be allotted to the recording medium indicated by the recording medium designation information, according to the allotment information; and

(d) an image output device which outputs an image of the logic page which has been calculated according to the allotment information.

An image output apparatus comprising:

(a) a memory which stores image data constituted by two or more logic pages which are associated with allotment information designating allotment of each of the logic pages to a recording medium, wherein each of the logic pages of the image data is allotted to each of a plurality of recording media according to the allotment information to output an image;

(b) an input device;

(c) a calculator which receives an input of logic page designation information indicating a desired logic page out of two or more logic pages from the input device, and calculates all the logic pages to be allotted to the same recording medium as the logic page indicated by the logic page designation information, according to the allotment information; and

(d) an image output device which outputs an image of the logic page which has been calculated, according to the allotment information.

An image output method comprising the steps of:

(a) storing image data constituted by two or more logic pages which are associated with allotment information designating allotment of each of the logic pages to a recording medium;

(b) receiving an input of the recording medium designation information indicating a desired recording medium out of a plurality of the recording media;

(c) calculating the logic page to be allotted to the recording medium indicated by the recording medium designation information, according to the allotment information; and

(d) outputting the image of the logic page which has been calculated, of the image data, according to the allotment information.

An image output method comprising the steps of:

(a) storing image data constituted by two or more logic pages which are associated with allotment information designating allotment of each of the logic pages to a recording medium;

(b) receiving an input of the logic page designation information indicating a desired logic page out of the two or more logic pages;

(c) calculating all the logic pages to be allotted to the same recording medium as the logic page indicated by the logic page designation information, according to the allotment information; and

(d) outputting an image of the logic page which has been calculated, according to the allotment information.

**BRIEF DESCRIPTION OF THE DRAWINGS**

Fig. 1 is a diagram representing the structure of the job according to an embodiment of the present invention;
Figs. 2(a) - 2(j) are diagrams representing the image data allotted to a printing sheet according to the allotment information;
Fig. 3 is a cross sectional view showing the overall structure of the image output apparatus as an embodiment of the present invention;
Fig. 4 is a functional block diagram showing the structure of control in the image output apparatus as an embodiment of the present invention;
Figs. 5(a) through 2(d) are the diagrams representing an example of the screen for display on the operation section;
Fig. 6 is a diagram representing the number of required image data items corresponding to allotment information;
Fig. 7 is a diagram representing the structure of the page table indicating the correspondence between logic pages and allotted pages;
Fig. 8 is a diagram representing the structure of the page table indicating the correspondence between logic pages and sheet numbers;
Fig. 9 is a schematic diagram showing an example of the image data allotted to the printing sheet; according to the allotment information; and
Fig. 10 is a flowchart showing the mode of operations in the image output apparatus.

**DETAILED DESCRIPTION OF THE PREFERRED EMBODIMENT**

The image output apparatus of the present embodiment receives the job containing the image data and the set data including the allotment information and stores it into a memory so that a job can be executed. Execution of the job causes an image to be outputted according to the image data and set data.

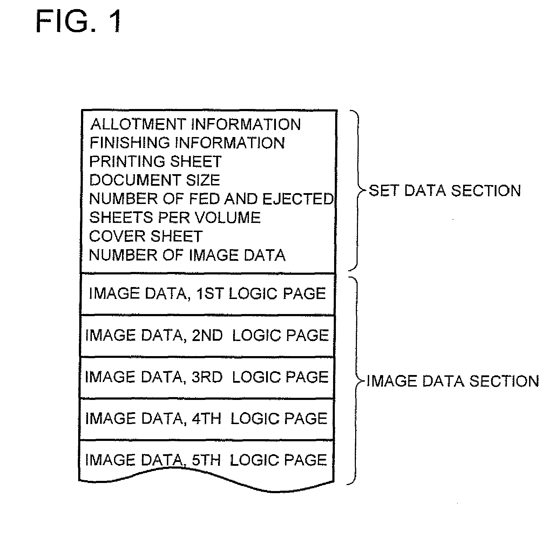

Fig. 1 shows an example of the job structure. As shown in Fig. 1, the job is made of a set data part and an image data part. The set data part contains a description of the set data. The data contains at least the allotment information. Further, it includes the finishing information indicating the presence or absence of a punch and stapling process, the information for designating the printing sheet to be used, information on the number of fed and ejected sheets per volume, the cover sheet information for adding cover sheet or back cover sheet (cover sheet and/or back cover sheet may be called "cover page"), document size information on image data and information on the number of image data items. The image data part contains a description of image data items arranged in the order of logic page. The logic page is each page of image data in the job. For example, it is arranged in the order of reading by the reading device, namely, in the order of document when image data has been created, or in the order of page on application software when image data has been created by starting the application software at the work terminal. In the following description, for example, the second items of the logic page may be called a logic page 2.

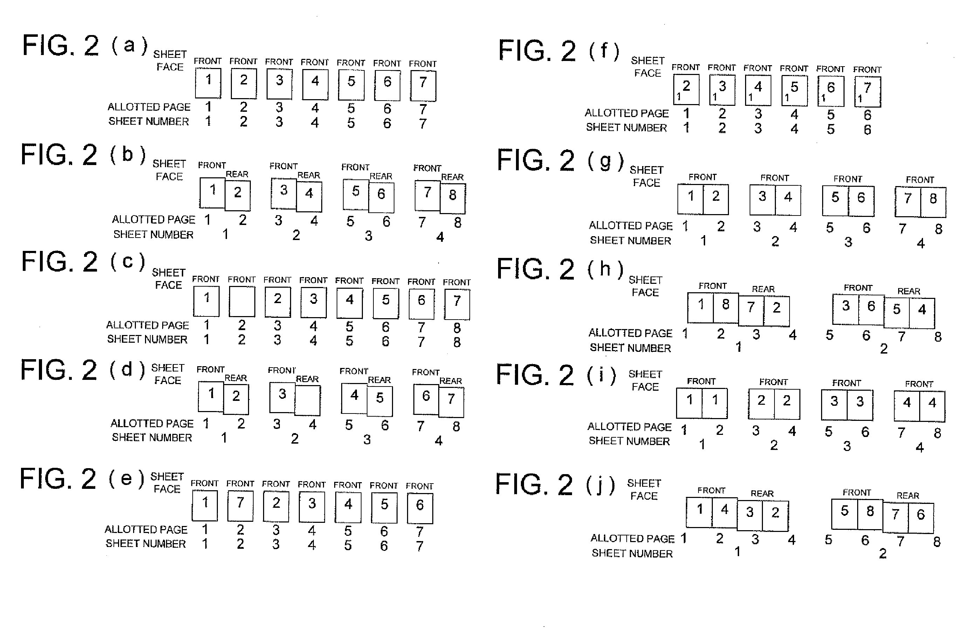

Referring to Figs. 2(a) through 2(j), the following describes the examples of allotment such as the one-sided face, two-sided face, intersheet, chaptering, inserted page, overlaying, two-in-one, booklet, repeat, adhesive binding and the combination thereof.

The image of the one-sided face is outputted to the front of the printing sheet as shown in Fig. 2(a). The numeral shown on the sheet face (front in Fig. 2(a)) of the printing sheet in this figure denotes the image and the logic page of image data in the job (this also applies to the cases in the following figures). Printing sheets are arranged in the order of output, and the order of arrangement corresponds to the sheet number. Further, in the following description, the second printing sheet in terms of the sheet number, for example, may be called sheet number 2. The order of the image data subsequent to allotment of image data will be represented in terms of the allotted page. In the following description, the second page subsequent to allotment may be called the 2nd allotted page.

The image of the two-sided face is outputted on the front and rear of the printing sheet, as shown in Fig. 2(b).

The intersheet (where the case of inserting the intersheet as the second printing sheet in the one-sided face mode is given in the figure) is the printing sheet without image output inserted to the designated position of insertion. The sheet number 2 corresponds to the printing sheet without image output, as shown in Fig. 2(c).

Chaptering is the mode where the image of the logic page as the leading portion of each chapter is outputted to the front of the printing sheet in this example. For example, when chapter 2 is followed by the 4th logic page, the image of the 3rd logic page is outputted to the front of the sheet number 2, as shown in Fig. 2(d), and the image of the 4th logic page is outputted to the front of the sheet number 3.

In the inserted page mode, the image data of the designated logic page is outputted to the sheet face of the printing sheet of the sheet number. For example, when the 7th logic page of one-sided face is inserted to the position of the sheet number 2, the image of the 7th logic page is outputted to the front of the sheet number 2, as shown in Fig. 2(e).

In the overlay mode, the image data of the designated logic page is outputted on top of other image data. For example, when the 1st logic page image data of the one-side face is overlaid on other image data (2nd logic page through 7th logic page), the 1st logic page is overlaid on the 2nd logic page through 7th logic page, as shown in Fig. 2(f). The image of the page overlaid on the 2nd logic page is outputted to the sheet number 1, and so forth.

In the two-in-one mode, the images of two logic pages arranged on one sheet face of the printing sheet are outputted. For example, in the two-in-one mode of one-side face, the images of the 1st logic page and 2nd logic page are outputted on the same sheet face, the images of the 3rd logic page and 4th logic page are outputted on the same sheet face, and so forth, as shown in Fig. 2(g). In the four-in-one mode, the images of four image data items arranged on one sheet face of the printing sheet are outputted, and, in the eight-in-one mode, the images of eight image data items arranged on one sheet face of the printing sheet are outputted.

In the booklet mode, image data is allotted to the right and left of the front and rear of each printing sheet and the image is outputted. The printing sheets are put one on top of another and are folded at the center and are bound. This procedure produces a booklet wherein images are arranged in the order of the logic page of the image data from the left or right side. For example, when the image of eight image data items are outputted in the booklet mode, as shown in Fig. 2(h), the 1st and 8th and 8 logic pages are outputted on the front of the sheet number 1, the 7th and 2nd logic pages are outputted on the rear of the sheet number 1, the 3rd and 6th logic pages are outputted on the front of the sheet number 2 and 5th and 4th logic pages are outputted on the rear of the sheet number 2. In this case, when the printing sheets are placed one on top of another and are folded at the center and are bound, images are arranged in the order of the logic page of the image data from the right, whereby a booklet is formed.

In the repeat mode, the same image data items are arranged on one sheet face, and images are outputted. For example, in the repeat mode of one-sided face, as shown in Fig. 2(i), the following images are outputted to the sheet faces having the same the 1st logic page, the sheet faces having the same the 2nd logic page and so forth. In this example of the repeat mode, image data is outputted twice. Four and eight repetitions are also possible.

In the adhesive binding mode, image data is allotted to the right and left of the front and rear of each printing sheet and the image is outputted. Then printing sheets are folded at the center and are bound by adjusting the folded side. This procedure produces a booklet wherein images are arranged in the order of the logic page of the image data from the left or right. For example, when eight image data items are outputted in the adhesive binding mode, as shown in Fig. 2(j), the images of the 1st and 4th logic pages are outputted on the front of the sheet number 1, the images of the 3rd and 2nd logic pages are outputted on rear front of the sheet number 1, the images of the 5th and 8th logic pages are outputted on the front of the sheet number 2, and the images of the 7th and 6th logic pages are outputted on the rear of the sheet number 2. In this case, the printing sheets are folded at the center and are bound by adjusting the folded side. This procedure produces a booklet wherein images are arranged in the order of the logic page of the image data from the right.

Referring to drawings, the following specifically describes an embodiment of the image output apparatus according to the present invention.

(Overall structure)

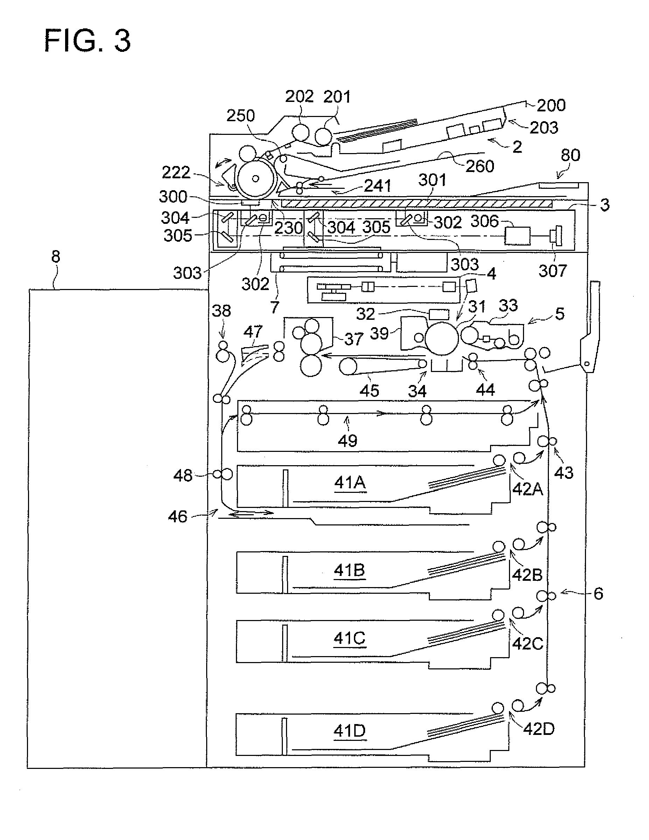

Fig. 3 is a cross sectional view showing the image output apparatus as an embodiment of the present invention. The image output apparatus is a so-called electrophotographic digital copying machine. As shown in Fig. 1, the image output apparatus contains an operation section 80, an automatic document feeder 2, a document reading section 3, an image writing section 4, an image forming section 5 including a transfer material feeding device, a sheet feeding section 6, a finishing section 8, and control section 7.

The operation section 80 performs the function of the input device and the display device in an embodiment of the present invention. It includes a switch, a numeric keypad and a liquid crystal touch panel and the like, although their details are not given in the drawing. These keys and liquid crystal touch panel and the like can be used to input data.

The automatic document feeder 2 includes a document tray 200, a document feeding section 203 further containing a sheet feed roller 201 and a separation roller 202, a conveying section 222 (conveyor), a document reading position 230, a document reversing section 241, a sheet ejection roller 250, and a sheet ejection tray 260. It sequentially feeds the document placed on the document tray 200 of the document feeding section 203 to the document reading position 230, whereby the document is read and ejected to the sheet ejection tray 260.

When the document is read in the two-sided face mode, the front of the document is first read. After that, the document is reversed by the document reversing section 241 and is fed against the document reading position 230, where the rear is read. After that, the document is ejected to the sheet ejection tray 260.

The document reading section 3 includes a platen glass 300 for providing exposure for reading by moving the document, a platen glass 301 for providing exposure for reading, with the document placed thereon, a light source 302, mirrors 303, 304 and 305, an image optics system 306, an image pickup device 307 containing a CCD, and an optics driving system. In the document reading section 3, light is applied to the document on the platen glass 300 and 301 from the light source 302 made up of the xenon lamp, and the reflected light is led to the mirrors 303, 304 and 305. The light is then led into the CCD image pickup device 307 through the image optics system 306. The detected light is converted into an analog signal through photoelectric conversion. In the image processing section (not illustrated), the analog signal is subjected to analog processing, analog-to-digital conversion, shading correction and image compression and so on, and is formed into the image data of digital signal. Then the set data having been inputted through the operation section 80 is attached to this image data, whereby a job is created. Further, when a document is placed on the platen glass 301, the optics driving system scans the document along the platen glass 301, whereby the image is read by the CCD image pickup device 307.

When the image signal is inputted to the image writing section 4 according to the image data, in the image forming section 5, the photoreceptor drum 31 is turned in the clockwise direction. Electric charge is removed from the front of the photoreceptor drum 31, then electrical charge is provided by a charger 32. In response to the image signal, the laser beam is applied to the photoreceptor drum 31 by the image writing section 4, and an electrostatic latent image is formed. After that, the aforementioned electrostatic latent image on the photoreceptor drum 31 is developed by the developing device 33 in the way of the reversal development, whereby a visible toner image is formed.

The sheet feeding section 6 is equipped with sheet feed trays 41A through 41D. The sheet feed trays 41A through 41D store printing sheets of various sizes and types. The printing sheet having been selected is fed from any one of the sheet feed trays 41A through 41D by one of the feeding rollers 42A through 42D, and is fed to the image transfer section 34 through the conveyance roller 43. The printing sheet having been fed is conveyed onto the photoreceptor drum 31 by the conveyance roller 44 operating in synchronism with the toner image on the photoreceptor drum 31. The toner image on the photoreceptor drum 31 is transferred to this printing sheet by the transfer section 34. After having been separated from the photoreceptor drum 31, the printing sheet is fed to the fixing device 37 through a conveyance belt 45. After having been fixed by heat, the printing sheet is fed to the finisher section 8 by the sheet ejection roller 38.

When an image is outputted to the two-sided face of the printing sheet, the printing sheet having an image formed on the front and fixed by heat is fed downward by the guide 47. The printing sheet is reversed by the reversing roller 48 of the reversing section 46 and is fed out. Then the printing sheet is again is fed to the image forming section 5 through reverse conveyance path 49 where an image is formed on the rear.

Receiving the printing sheets fed from the sheet ejection roller 38, the finisher section 8 allows them to be stacked inside and performs binding operations, although the details are not illustrated. The finisher section 8 is equipped with binding devices such as a stapler providing stapling operations, a folding device for folding the recording medium in the case of center folding and center binding, and a covering device for providing an additional cover sheet.

(Control structure)

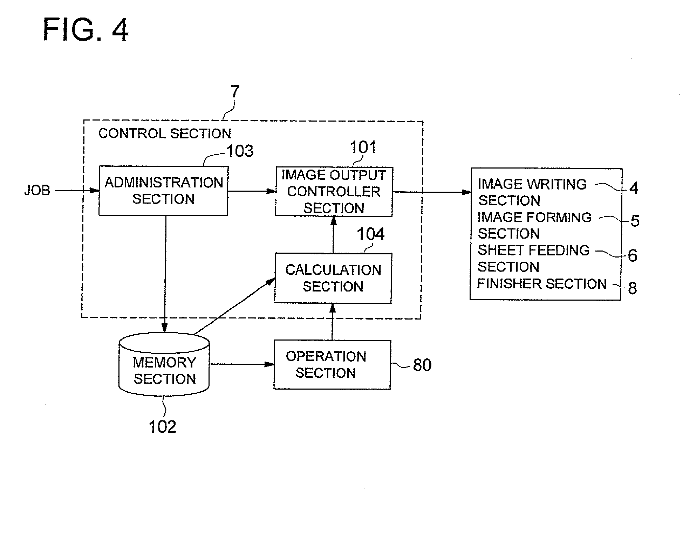

In the job of the present embodiment, a desired one of the printing sheets to which the image data is allotted is outputted in response to the allotment information. The following describes the control structure of the present embodiment with reference to Fig. 4. Fig. 4 is a functional block diagram showing the structure of control in the present embodiment.

The operation section 80 allows the aforementioned various keys and panels and the like to input the set data for selection of the number of sheets, variable power, copy density, allotment of one-sided and two-sided face and the size of printing sheet, and to instruct job execution start and others. The operation section 80 also has a function as an input device of the present embodiment, and permits the logic page or sheet number to be designated. Each designation can be inputted as the logic page designation information or printing sheet designation information. Further, the operation section 80 has a function of the display controller for controlling the liquid crystal touch panel.

The memory section 102 is a memory for storing the job received from the administration section 103. It is composed of the memory such as hard disk drive.

The control section 7 includes an administration section 103, an image output controller section 101 and a calculation section 104.

Upon receipt of the job, the administration section 103 sends it to the image output controller section 101 so that the job is executed. Alternatively, the administration section 103 sends the job to a memory section 102 where the job is stored. The job is created by adding the set data having been inputted from the operation section 80, to the image data created using the aforementioned document reading section 3. Alternatively, it is created by adding the set data to the image data at the work terminal (not illustrated), and is received via the network (not illustrated).

The image output controller section 101 controls the aforementioned image writing section 4, image forming section 5, sheet feeding section 6 and finisher section 8 in such a way that the job received from the administration section 103 or the job read from the memory section 103 is executed, and the image data is outputted in response to the set data. Thus, the "image output device" of the present embodiment includes an image output controller section 101, an image writing section 4, an image forming section 5, a sheet feeding section 6 and a finisher section 8. It also has a function of allotting device for allotting the image data to the printing sheet in response to the allotment information at the time of executing the job. This allotting device allots the logic page of the image data to the predetermined sheet number and sheet face, as shown in Figs. 2 (a) through (j). Further, when the predetermined sheet number corresponds to the printing sheet without image data allotted thereto, namely, the intersheet or cover sheet, it services as a function image output control device for stopping the designated page output processing.

The calculation section 104 has the following functions, although details will be described later. The calculation section 104 provides a function of a calculator for calculating the logic page of the image data allotted to the printing sheet including the logic page designated by the logic page designation information or the printing sheet of the sheet number designated by the printing sheet designation information, upon receipt of the logic page designation information from the operation section 80 or input of the printing sheet designation information. The calculation section 104 also provides a function as a table forming device for creating a table of correspondence between the image data and the designation of allotment. Further, the calculation section 104 has a function as a set data rewriting device for rewriting the set data into the data that allows outputting of only the set data of the aforementioned job corresponding to the designated sheet number. Further, when the designated sheet number corresponds to the printing sheet without image data allotment, for example, an intersheet or a cover sheet, the calculation section 104 controls the display controller so that an error is indicated on the operation section 80.

To implement these functions, the control section 7 is provided with a CPU (not illustrated) and a system memory for storing the aforementioned table, various types of programs, and the data required to the execution of the program, the system memory not illustrated constituting the work area for execution of various programs.

The following describes the details of designating the logic page or sheet number by the operation section 80, and calculating the logic page of the image data by the calculation section 104.

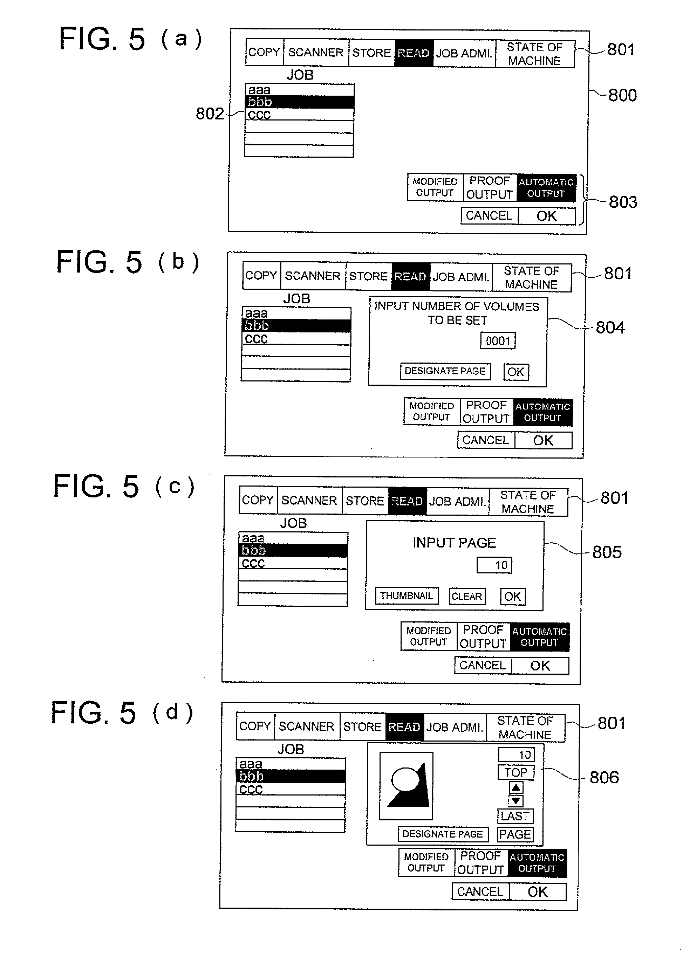

Referring to Figs. 5(a) through 5(d), the following describes the inputting of designation of the logic page or sheet number. The designation is inputted using the liquid crystal touch panel. The following indications are controlled by the display controller function of the operation section 80.

If the "Read" of the function display section 801 of the display screen 800 shown in Fig. 5(a) is touched, the memory section 102 is searched and the job stored in the memory section 102 is displayed on the job display section 802. If a desired job, for example, "bbb" is touched, and the "Automatic output" of the output display section 803 is touched, then the set volume quantity input display 804 is displayed, as shown in Fig. 5(b). The "Automatic output" is used to output all the job image data or the desired sheet number according to the set data. The "Proof output" is used for test printing of the job. The "wait function" is used to modify, for example, the position of the image with respect to the printing sheet.

The set volume quantity input display 804 shown in Fig. 5(b) is used to input the number of volumes to be outputted in the "automatic output", for example, by using the numeric keypad. If the "Designate page" of the set volume quantity input display 804 is touched, the page input display 805 is displayed, as shown in Fig. 5(c).

The page input display 805 shown in Fig. 5(c) is used to input the sheet number to be outputted in the "Automatic output". If a desired sheet number is inputted, for example, by using the numeric keypad and the "OK" is touched, the sheet number can be inputted. It is also possible to make such arrangements that the thumbnail display 806 shown in Fig. 5(d) is made to appear by touching the thumbnail of the page input display 805, and the image of the desired sheet number is indicated on the thumbnail display and is selected by touching the "Top", "▲", "▼", and "Last", whereby the sheet number designation is inputted. Further, if the thumbnail of the page is displayed by designating the sheet number (not illustrated), it is possible to ensure an effective display of the desired image on the thumbnail, when there are a great number of sheets.

With reference to the aforementioned page input display 805, the sheet number designation input has been described. The same procedure applies to the logic page designation input.

In the aforementioned manner, the designation of the number of the volumes to be outputted and the sheet number or logic page is inputted. Going back to the display screen 800 shown in Fig. 5 (a), the "OK" is touched. Then the designated sheet number is sent to the calculation section 104 as printing sheet designation information. Alternatively, the designated logic page is sent to the calculation section 104 as the logic page designation information.

In response to the printing sheet designation information or logic page designation information, the calculation section 104 calculates the logic page to be allotted. This procedure will be described below. The description will be made in two cases; the case of inputting the designation of the sheet number using the operation section 80 and the case of inputting the designation of the logic page.

(Sheet number)

The following describes the case of inputting the designation of the sheet number using the operation section 80.

(When using the number of required image data items)

To show an example, the following describes the method of calculating the logic page of the required image data by calculation using the number of the required image data items representing the number of the logic pages allotted to one printing sheet.

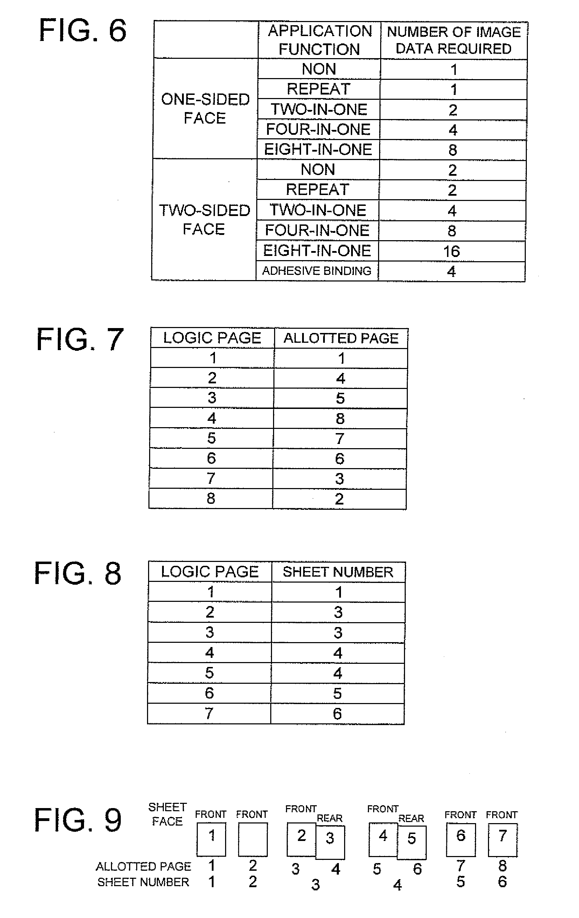

For example, the number of required image data items corresponding to the allotment information is stored in advance as a table for the number of required image data items. Fig. 6 shows the number of required image data items. Fig. 6 shows the number of required image data items for each of the one-sided face and two-sided face when such applied functions as repeat, two-in-one, four-in-one, eight-in-one, and adhesive binding functions are combined.

Upon receipt of the printing sheet designation information from the operation section 80, the calculation section 104 calculates the "Top" logic page of the image data allotted to the printing sheet of the sheet number represented by the printing sheet designation information as follows:

$$\text{(Top logic page)} = \text{(inputted sheet number 1)} \times \text{(the}$$

$$\text{number of required image data items)} + 1.$$

The last logic page is calculated as follows:

$$\text{(Last logic page)} = \text{(top logic page)} + \text{(the number of}$$

$$\text{required image data items)} -1.$$

For example, in the case of two-sided face and sheet number 3 without applied function, according to Fig. 2 (b), the aforementioned equation provides the following:

$$\text{Top logic page: } (3 - 1) \times 2 + 1 = 5,$$

$$\text{Last logic page : } 5 + 2 - 1 = 6.$$

(When the number of required image data items and the page table are used)

The following describes the method of using the number of required image data items to calculate the allotted page of the number of required image data items and obtaining the logic page corresponding to the allotted page. By way of an example, the following takes up the case of the booklet. The number of the required image data items is four in the case of a booklet.

The calculation section 104 creates a page table showing the correspondence between the logic page for allotment to a booklet and the allotted page from the number of the image data items in the job. Fig. 7 shows the page table. Upon receipt of the printing sheet designation information, the following results are obtained in the same manner as that of the aforementioned equation, for example, if the printing sheet designation information denotes the sheet number 1:

$$\text{top allotted page : } (1 - 1) \times 4 + 1 = 1$$

$$\text{last allotted page : } 1 + 4 - 1 = 4.$$

Then the logic pages corresponding to the allotted pages 1 through 4 are sought by searching the Table shown in Fig. 7 to get 1st, 8th, 7th and 2nd logic pages (See Fig. 2(h)).

(When the page table is used)

The following describes the case of using the page table showing the correspondence between the logic page and sheet number. This is used, for example, in the case of a intersheet and others that cannot be obtained by calculation. By way of an example, the following describes the case where the allotment information represents seven image data items, one-sided face and intersheet (a blank sheet is inserted as the second sheet number), and the 2nd through 5th logic pages are in the two-sided face mode.

The calculation section 104 creates the page table showing the correspondence between the logic page of the job and the sheet number when logic pages are allotted according to the allotment information. Fig. 8 shows the page table. Fig. 9 shows the allotment to the printing sheet. The relationship between the logic page and sheet number given in Fig. 8 is the same as the relationship shown in Fig. 9.

Upon receipt of the printing sheet designation information from the operation section 80, the logic page corresponding to the sheet number 4 is obtained by searching the table given in Fig. 8, for example, if the printing sheet designation information denotes sheet number 4. This will provide 4th and 5th logic pages (Fig. 9).

The aforementioned case of the two-sided face in the booklet mode can be obtained by using the page table showing the correspondence between the logic page and sheet number.

(Logic page)

The following describes the case where the logic page designation is inputted using the operation section 80.

(When the number of the required image data items is used)

By way of an example, the following describes the method of obtaining the logic page of the image data required for calculation, using the number of required image data items.

The table for the number of required image data items is stored in advance (Fig. 6).

Upon receipt of logic page designation information from the operation section 80, the calculation section 104 calculates the top logic page of the image data allotted to the printing sheet of the sheet number including the logic page denoted by the logic page designation information to get the following:

$$\text{(top logic page )} = \text{the quotient of (inputted logic page - 1) / (the number of required image data items) x (the number of required image data items) + 1,}$$

where the quotient indicates the integral part of the result obtained by division.

The calculation section 104 calculates the last logic page to get the following:

$$\text{(last logic page )} = \text{(top logic page )} + \text{(the number of required image data items)} - 1.$$

By way of an example, in the case of two-sided face and 3rd logic page without applied function, the following result can be obtained from the aforementioned equation (Fig. 2 (b)):

$$\text{top logic page : (the quotient of (3 - 1) / 2) x 2 + 1}$$

$$= 3;$$

and

$$\texttt{last logic page : 3 + 2 - 1 = 4.}$$

(When the page table is used)

The following describes the case of using the page table showing the correspondence between the logic page and sheet number. This is used, for example, in the case of an intersheet and others that cannot be obtained by calculation. By way of an example, the following describes the case where the allotment information represents seven image data items, one-sided face and intersheet (a blank sheet is inserted as the second sheet number), and the 2nd through 5th logic pages are in the two-sided face mode.

The calculation section 104 creates the page table showing the correspondence between the logic page of the job and the sheet number when logic pages are allotted according to the allotment information. Fig. 8 shows the page table. Fig. 9 shows the allotment to the printing sheet. The relationship between the logic page and sheet number given in Fig. 8 is the same as the relationship shown in Fig. 9.

Upon receipt of the printing sheet designation information from the operation section 80, the sheet number 4 is obtained by searching the table given in Fig. 8, for example, if the printing sheet designation information denotes sheet number 4. Further, the logic page corresponding to the sheet number 4 is obtained by searching the table given in Fig. 8. This will provide 4th and 5th logic pages (Fig. 9).

When the logic page has been obtained, as described above, the calculation section 104 rewrites the set data of the job in such a way that only the printing sheet provided with the obtained logic page according to the allotment information will be outputted. The number of the logic pages for obtaining the number of image data items is subjected to rewriting in such a way that the number of the sheets to be fed and ejected (since one printing sheet for each volume) is rewritten as "1", "no cover sheet" is written if the cover sheet has been set, and "no finishing" is written if finishing process is set. The image data of the logic page having been obtained and the set data having been rewritten are sent to the image output controller section 101.

It is also possible to make such arrangements that the job is read in the first place, the image data other than the logic page having been extracted is deleted, and the set data is written and handed over to the image output controller section 101.

The image output controller section 101 controls the image writing section 4, image forming section 5, sheet feeding section 6 and finisher section 8 in such a way that the image will be outputted when the logic page of the image data of the job having been obtained by the calculation section 104 is allotted according to the allotment information.

The image data having been allotted according to the allotment information contained in the set data of the job can be outputted to the printing sheet including the logic page having been designated in the aforementioned manner or to the printing sheet of the designated sheet number.

It goes without saying that the present control structure is applicable not only to the electrophotographic copying machine but also to the electrophotographic color laser printer, multifunction machine having scanner, copier and facsimile functions, electrophotographic printer, inkjet printer, silver halide photographic printer and so on.

(Operation mode)

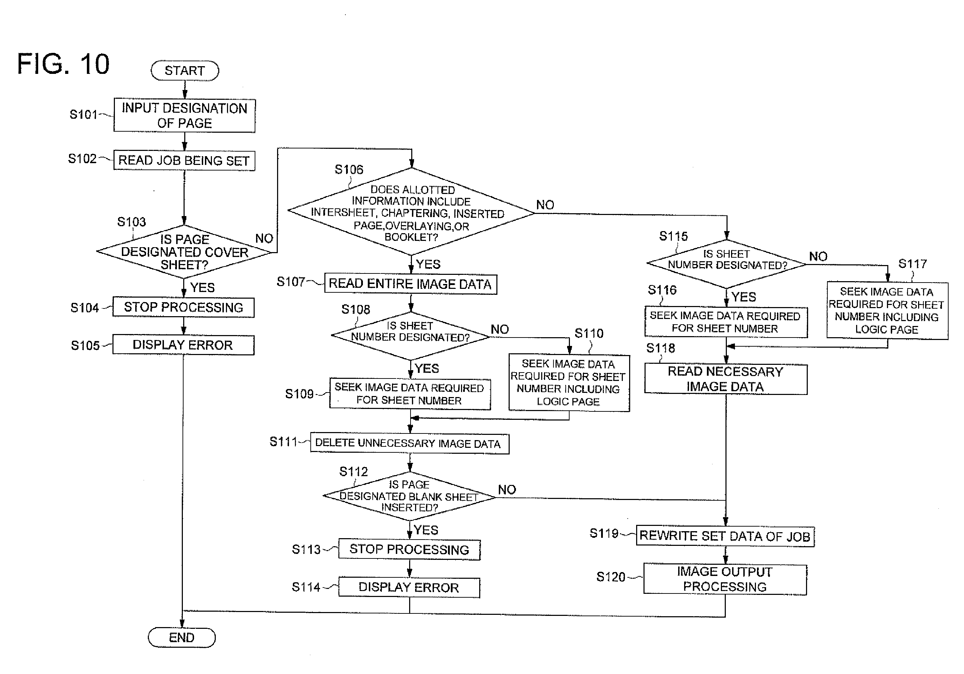

The following describes an example of the operation mode of the image output apparatus having the aforementioned structure, with reference to Fig. 10. Fig. 10 is a flowchart representing the operation mode of the present image output apparatus.

In the first place, the operator operates the operation section 80 and inputs the printing sheet designation information indicating the desired sheet number of the job, or the logic page designation information showing the desired logic page, and the number of volumes to be outputted (Step S101 in Fig. 10; hereinafter referred to as "S101", same for other Steps). Upon receipt of the input from the operation section 80, the calculation section 104 reads the set data of the job (S102), and a decision is made to on whether the designated sheet number indicates the cover page or not. If it shows the cover page (Yes in S103), processing is stopped (S104), and an error display is given by the operation section 80 (S105). The display of error denotes that the processing has stopped, the cover page has been indicated or the image is not outputted (because of the presence of the cover page) and the like.

If no cover page is indicated (NO in S103), the system proceeds to the S106. If the allotment information of the set data includes the information on intersheet, chaptering, inserted page, overlaying or booklet, the calculation section 104 (Yes in S106), the image data of the job is read out (S107). If the sheet number is designated (printing sheet designation information has been received) (Yes in S108), the logic page of the image data included in the sheet number indicated by the printing sheet designation information is obtained (S109), as described above. If the logic page has been specified (the logic page designation information has been received) (No in S108), the sheet number including the logic page indicated by the logic page designation information is obtained, and all the logic pages contained in the sheet number is obtained (S110).

The calculation section 104 deletes the image data other than the logic page obtained from the image data having been read in S107 (S111). If the designated page indicates a blank sheet (intersheet i.e., without extracted image data) (Yes in S112), the calculation section 104 stops processing (S113), and an error display is given by the operation section 80 (S114). The display of error denotes that the processing has stopped, the intersheet has been indicated or there is no image data and the like. If the designated page is not a blank sheet (No in S112), the calculation section 104 rewrites the set data so that only the designated sheet numbers are outputted (S119). The image data of the logic page having been obtained, and the set data having been rewritten are handed over to the image output controller section 101. The image output controller section 101 receives the image data obtained by the calculation section 104 and the set data having been rewritten, and outputs the image (S120).

If the allotment information of the set data does not contain the information on intersheet, chaptering, inserted page, overlaying or booklet (No in S106), the calculation section 104 extracts the logic page of the image data contained in the sheet number indicated by the printing sheet designation information (S116), as described above, if the sheet number is designated (printing sheet designation information has been received) (Yes in S115). If the logic page is indicated (logic page designation information has been received) (No in S115), the sheet number including the logic page indicated by the logic page designation information is obtained as described above, all the logic pages included in the sheet number are obtained (S117).

The calculation section 104 rewrites the set data to ensure that the image data of the logic page having been obtained is read out (S118), and only the designated sheet number is outputted (S119). The image data having been obtained, and the set data having been rewritten are handed over to the image output controller section 101. The image output controller section 101 receives the image data obtained by the calculation section 104 and the set data having been rewritten, and outputs the image (S120).

In the aforementioned embodiment, an example of outputting to the printing sheet has been described to show an example of the image output of the logic page having been obtained by the calculation section 104. It is also possible to make such arrangements that a display device such as a display is used to display the image when the logic page having been obtained is outputted to the printing sheet.

According to the image output apparatus described in Structure 1, if the recording medium or allotted page is designated, the logic page allotted to the recording medium or allotted page can be obtained and the image can be inputted.

According to the image output apparatus described in Structure 2, the logic page having been obtained can be allotted to the recording medium and the image can be recorded.

According to the image output apparatus described in Structure 8, if the logic page is designated, all the logic pages allotted to the recording medium or allotted page with the logic page allotted thereto can be obtained and the image can be inputted.

According to the image output apparatus described in Structure 9, the logic page having been obtained can be allotted to the recording medium and the image can be recorded.

According to the image output method described in Structure 13, if the recording medium or allotted page is designated, the logic page allotted to the recording medium or allotted page can be obtained and the image can be inputted.

According to the image output method described in Structure 14, if the logic page is designated, all the logic pages allotted to the recording medium or allotted page with the logic page allotted thereto can be obtained and the image can be inputted.

**Claims**

1. An image output apparatus comprising:

(a) a memory which stores image data constituted by two or more logic pages which are associated with allotment information designating allotment of each of the logic pages to a recording medium, wherein each of the logic pages of the image data is allotted to each of a plurality of recording media according to the allotment information to output an image;
(b) an input device;
(c) a calculator which receives an input of recording medium designation information which indicates a desired recording medium out of the plurality of the recording media from the input device, and calculates the logic page to be allotted to the recording medium indicated by the recording medium designation information, according to the allotment information; and

(d) an image output device which outputs an image of the logic page which has been calculated according to the allotment information.

**2.** The image output apparatus of claim 1,
wherein the image output device allots the logic page which has been calculated, to the recording medium according to the allotment information, to record the image on the recording medium.

**3.** The image output apparatus of claim 1 or 2, wherein the calculator receives an input of the recording medium designation information indicating any one of the plurality of the recording media from the input device.

**4.** The image output apparatus of any one of claims 1 to 3, further comprising:

a table showing the number of logic pages to be allotted to each of the recording media corresponding to the allotment information,

wherein the calculator calculates the logic page allotted to the recording medium which is indicated by the recording medium designation information, based on the number of the logic pages corresponding to the allotment information and the recording medium designation information.

**5.** The image output apparatus of any one of claims 1 to 3,
wherein the calculator calculates a correspondence between each of the logic pages and the recording medium to be allotted with each of the logic page based on the allotment information, and acquires the logic page to be allotted to the recording medium indicated by the recording medium designation information, using the correspondence.

**6.** The image output apparatus of any one of claims 1 to 5, further comprising:

an image output controller which stops the image output of the image output device, if there is no logic page to be calculated by the calculator.

**7.** The image output apparatus of claim 6, further comprising:

a display device; and
a display controller which makes the display device to display information indicating an error, if there is no logic page to be calculated by the calculator.

**8.** An image output apparatus comprising:

(a) a memory which stores image data constituted by two or more logic pages which are associated with allotment information designating allotment of each of the logic pages to a recording medium, wherein each of the logic pages of the image data is allotted to each of a plurality of recording media according to the allotment information to output an image;
(b) an input device;
(c) a calculator which receives an input of logic page designation information indicating a desired logic page out of two or more logic pages from the input device, and calculates all the logic pages to be allotted to the same recording medium as the logic page indicated by the logic page designation information, according to the allotment information; and
(d) an image output device which outputs an image of the logic page which has been calculated, according to the allotment information.

**9.** The image output apparatus of claim 8,
wherein the image output device allots the calculated logic page to the recording medium to which the logic page indicated by the logic page designation information is to be allotted with according to the logic page designation information, to record images on the recording medium.

**10.** The image output apparatus of claim 8 or 9,
wherein the calculator receives an input of the logic page designation information indicating any one of two or more logic pages from the input device.

**11.** The image output apparatus of any one of claims 8 to 10, further comprising:

a table indicating the number of the logic page allotted to each of the recording media corresponding to the allotment information,

wherein the calculator calculates all the logic pages to be allotted to the same recording medium as the logic page indicated by the logic page designation information, based on the number of the logic pages corresponding to the allotment information and the logic page designation information.

**12.** The image output apparatus of any one of claims 8 to 10,
wherein the calculator calculates a correspondence between each of the logic pages and the recording medium to be allotted with each of the logic page based on the allotment information, and acquires all the logic pages to be allotted to the same recording medium as the logic pates indicated by the logic page designation information, using the allotment information.

**13.** An image output method comprising the steps of:

(a) storing image data constituted by two or more logic pages which are associated with allotment information designating allotment of each of the logic pages to a recording medium;
(b) receiving an input of the recording medium designation information indicating a desired recording medium out of a plurality of the recording media;
(c) calculating the logic page to be allotted to the recording medium indicated by the recording medium designation information, according to the allotment information; and
(d) outputting the image of the logic page which has been calculated, of the image data, according to the allotment information.

**14.** An image output method comprising the steps of:

(a) storing image data constituted by two or more logic pages which are associated with allotment information designating allotment of each of the logic pages to a recording medium;
(b) receiving an input of the logic page designation information indicating a desired logic page out of the two or more logic pages;
(c) calculating all the logic pages to be allotted to the same recording medium as the logic page indicated by the logic page designation information, according to the allotment information; and
(d) outputting an image of the logic page which has been calculated, according to the allotment information.

# FIG. 1

| | |
|---|---|
| ALLOTMENT INFORMATION<br>FINISHING INFORMATION<br>PRINTING SHEET<br>DOCUMENT SIZE<br>NUMBER OF FED AND EJECTED<br>SHEETS PER VOLUME<br>COVER SHEET<br>NUMBER OF IMAGE DATA | } SET DATA SECTION |
| IMAGE DATA, 1ST LOGIC PAGE | |
| IMAGE DATA, 2ND LOGIC PAGE | |
| IMAGE DATA, 3RD LOGIC PAGE | } IMAGE DATA SECTION |
| IMAGE DATA, 4TH LOGIC PAGE | |
| IMAGE DATA, 5TH LOGIC PAGE | |

## FIG. 2 (a)

SHEET FACE: FRONT FRONT FRONT FRONT FRONT FRONT FRONT
| 1 | 2 | 3 | 4 | 5 | 6 | 7 |

ALLOTTED PAGE   1   2   3   4   5   6   7
SHEET NUMBER    1   2   3   4   5   6   7

## FIG. 2 (b)

SHEET FACE: FRONT/REAR ...
| 1 | 2 | | 3 | 4 | | 5 | 6 | | 7 | 8 |

ALLOTTED PAGE   1   2   3   4   5   6   7   8
SHEET NUMBER      1       2       3       4

## FIG. 2 (c)

SHEET FACE: FRONT FRONT FRONT FRONT FRONT FRONT FRONT FRONT
| 1 | | | 2 | 3 | 4 | 5 | 6 | 7 |

ALLOTTED PAGE   1   2   3   4   5   6   7   8
SHEET NUMBER    1   2   3   4   5   6   7   8

## FIG. 2 (d)

SHEET FACE: FRONT/REAR ...
| 1 | 2 | | 3 | | | 4 | 5 | | 6 | 7 |

ALLOTTED PAGE   1   2   3   4   5   6   7   8
SHEET NUMBER      1       2       3       4

## FIG. 2 (e)

SHEET FACE: FRONT FRONT FRONT FRONT FRONT FRONT FRONT
| 1 | 7 | 2 | 3 | 4 | 5 | 6 |

ALLOTTED PAGE   1   2   3   4   5   6   7
SHEET NUMBER    1   2   3   4   5   6   7

## FIG. 2 (f)

SHEET FACE: FRONT FRONT FRONT FRONT FRONT FRONT
| 2 (1) | 3 (1) | 4 (1) | 5 | 6 (1) | 7 (1) |

ALLOTTED PAGE   1   2   3   4   5   6
SHEET NUMBER    1   2   3   4   5   6

## FIG. 2 (g)

SHEET FACE: FRONT FRONT FRONT FRONT
| 1 | 2 | | 3 | 4 | | 5 | 6 | | 7 | 8 |

ALLOTTED PAGE   1   2   3   4   5   6   7   8
SHEET NUMBER      1       2       3       4

## FIG. 2 (h)

SHEET FACE: FRONT REAR   FRONT REAR
| 1 | 8 | 7 | 2 |   | 3 | 6 | 5 | 4 |

ALLOTTED PAGE   1   2   3   4   5   6   7   8
SHEET NUMBER          1               2

## FIG. 2 (i)

SHEET FACE: FRONT FRONT FRONT FRONT
| 1 | 1 | 2 | 2 | 3 | 3 | 4 | 4 |

ALLOTTED PAGE   1   2   3   4   5   6   7   8
SHEET NUMBER      1       2       3       4

## FIG. 2 (j)

SHEET FACE: FRONT REAR   FRONT REAR
| 1 | 4 | 3 | 2 |   | 5 | 8 | 7 | 6 |

ALLOTTED PAGE   1   2   3   4   5   6   7   8
SHEET NUMBER              1               2

EP 1 739 595 A2

# FIG. 3

# FIG. 4

FIG. 5 (a)

| COPY | SCANNER | STORE | READ | JOB ADMI. | STATE OF MACHINE |
|------|---------|-------|------|-----------|------------------|

— 801

— 800

JOB

aaa
bbb
ccc

802

| MODIFIED OUTPUT | PROOF OUTPUT | AUTOMATIC OUTPUT |
|-----------------|--------------|------------------|

| CANCEL | OK |

— 803

FIG. 5 (b)

| COPY | SCANNER | STORE | READ | JOB ADMI. | STATE OF MACHINE |
|------|---------|-------|------|-----------|------------------|

— 801

JOB

aaa
bbb
ccc

INPUT NUMBER OF VOLUMES TO BE SET

0001

— 804

| DESIGNATE PAGE | OK |

| MODIFIED OUTPUT | PROOF OUTPUT | AUTOMATIC OUTPUT |
|-----------------|--------------|------------------|

| CANCEL | OK |

FIG. 5 (c)

| COPY | SCANNER | STORE | READ | JOB ADMI. | STATE OF MACHINE |
|------|---------|-------|------|-----------|------------------|

— 801

JOB

aaa
bbb
ccc

INPUT PAGE

10

— 805

| THUMBNAIL | CLEAR | OK |

| MODIFIED OUTPUT | PROOF OUTPUT | AUTOMATIC OUTPUT |
|-----------------|--------------|------------------|

| CANCEL | OK |

FIG. 5 (d)

| COPY | SCANNER | STORE | READ | JOB ADMI. | STATE OF MACHINE |
|------|---------|-------|------|-----------|------------------|

— 801

JOB

aaa
bbb
ccc

10

TOP

▲
▼

LAST | PAGE

— 806

| DESIGNATE PAGE |

| MODIFIED OUTPUT | PROOF OUTPUT | AUTOMATIC OUTPUT |
|-----------------|--------------|------------------|

| CANCEL | OK |

FIG. 6

| | APPLICATION FUNCTION | NUMBER OF IMAGE DATA REQUIRED |
|---|---|---|
| ONE-SIDED FACE | NON | 1 |
| | REPEAT | 1 |
| | TWO-IN-ONE | 2 |
| | FOUR-IN-ONE | 4 |
| | EIGHT-IN-ONE | 8 |
| TWO-SIDED FACE | NON | 2 |
| | REPEAT | 2 |
| | TWO-IN-ONE | 4 |
| | FOUR-IN-ONE | 8 |
| | EIGHT-IN-ONE | 16 |
| | ADHESIVE BINDING | 4 |

FIG. 7

| LOGIC PAGE | ALLOTTED PAGE |
|---|---|
| 1 | 1 |
| 2 | 4 |
| 3 | 5 |
| 4 | 8 |
| 5 | 7 |
| 6 | 6 |
| 7 | 3 |
| 8 | 2 |

FIG. 8

| LOGIC PAGE | SHEET NUMBER |
|---|---|
| 1 | 1 |
| 2 | 3 |
| 3 | 3 |
| 4 | 4 |
| 5 | 4 |
| 6 | 5 |
| 7 | 6 |

FIG. 9

| SHEET FACE | FRONT | FRONT | FRONT REAR | FRONT REAR | FRONT | FRONT |
|---|---|---|---|---|---|---|
| | 1 | | 2 3 | 4 5 | 6 | 7 |
| ALLOTTED PAGE | 1 | 2 | 3 4 | 5 6 | 7 | 8 |
| SHEET NUMBER | 1 | 2 | 3 | 4 | 5 | 6 |

FIG. 10

START

S101 — INPUT DESIGNATION OF PAGE

S102 — READ JOB BEING SET

S103 — IS PAGE DESIGNATED COVER SHEET?
- YES → S104 — STOP PROCESSING → S105 — DISPLAY ERROR
- NO ↓

S106 — DOES ALLOTTED INFORMATION INCLUDE INTERSHEET, CHAPTERING, INSERTED PAGE, OVERLAYING, OR BOOKLET?
- YES ↓
- NO → S115 — IS SHEET NUMBER DESIGNATED?

S107 — READ ENTIRE IMAGE DATA

S108 — IS SHEET NUMBER DESIGNATED?
- NO → S110 — SEEK IMAGE DATA REQUIRED FOR SHEET NUMBER INCLUDING LOGIC PAGE
- YES ↓

S109 — SEEK IMAGE DATA REQUIRED FOR SHEET NUMBER

S111 — DELETE UNNECESSARY IMAGE DATA

S112 — IS PAGE DESIGNATED BLANK SHEET INSERTED?
- YES → S113 — STOP PROCESSING → S114 — DISPLAY ERROR
- NO ↓

S115 — IS SHEET NUMBER DESIGNATED?
- YES → S116 — SEEK IMAGE DATA REQUIRED FOR SHEET NUMBER
- NO → S117 — SEEK IMAGE DATA REQUIRED FOR SHEET NUMBER INCLUDING LOGIC PAGE

S118 — READ NECESSARY IMAGE DATA

S119 — REWRITE SET DATA OF JOB

S120 — IMAGE OUTPUT PROCESSING

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005190996 A
- JP 2003094756 A